# EUROPÄISCHE PATENTSCHRIFT

(11) **EP 0 827 464 B1**
(45) Veröffentlichungstag und Bekanntmachung des Hinweises auf die Patenterteilung: **13.06.2001**
(21) Anmeldenummer: 96918647.7
(22) Anmeldetag: 30.05.1996
(51) Int. Cl.: B60R 21/00

(54) **PASSIVES RÜCKHALTESYSTEM FÜR KRAFTFAHRZEUGE UND AIRBAGMODUL ALS RÜCKHALTEKOMPONENTE**
PASSIVE RESTRAINING SYSTEM FOR MOTOR VEHICLES AND AIR BAG MODULE USEFUL AS RESTRAINING ELEMENT
SYSTEME PASSIF DE RETENUE POUR VEHICULES A MOTEUR ET MODULE A AIRBAG UTILISE COMME ELEMENT DE RETENUE

(30) Priorität: 30.05.1995 DE 19519130
(43) Veröffentlichungstag der Anmeldung: 11.03.1998
(73) Patentinhaber: SIEMENS AKTIENGESELLSCHAFT, 80333 München (DE)
(72) Erfinder: BISCHOFF, Michael, D-63791 Karlstein (DE)
(74) Vertreter: Fuchs Mehler Weiss & Fritzsche
(86) Internationale Anmeldenummer: EP9602320
(87) Internationale Veröffentlichungsnummer: WO9638323

(56) Entgegenhaltungen:
- EP-A- 0 568 901
- WO-A-95/11819
- DE-A- 3 811 217

## Beschreibung

Die vorliegende Erfindung betrifft ein passives Rückhaltesystem zur Anwendung in Kraftfahrzeugen sowie ein Airbag-Modul als Rückhaltekomponente, wie es vorzugsweise in dem passiven Rückhaltesystem zum Einsatz kommt.

Passive Rückhaltesystem für Kraftfahrzeuge sind in vielfältiger Ausführung seit längerem in der Praxis im Einsatz. Eine Rückhaltekomponente eines solchen Rückhaltesystems ist ein Airbag, also ein Gassack der im Falle eines Unfalls innerhalb von Bruchteilen einer Sekunde aufgeblasen wird, um den durch den Aufprall nach vorne geschleuderten Oberkörper des Fahrers und/oder Beifahrers aufzufangen. Ein solches einen Airbag umfassendes Rückhaltesystem verfügt über einen sogenannten Crashsensor, der im Falle eines Unfalls ein entsprechendes Signal generiert, welches dann von einer Auswerteelektronik weiter verarbeitet wird. Ein Crashsensor ist üblicherweise ein Verzögerungsmesser, d. h. es wird die negative Beschleunigung gemessen, die im Falle eines Unfalls wesentlich stärker ist als bei der normalen Abbremsung des Kraftfahrzeugs im normalen Straßenverkehr. Überschreitet unter anderem der Wert der negativen Beschleunigung einen gewissen voreingestellten Wert, interpretiert die Auswerteelektronik diesen dahingehend, daß ein Unfall eingetreten ist, woraufhin ein Aufforderungssignal zum Auslösen einer Rückhaltekomponente generiert wird. Das Aufforderungssignal bewirkt, daß beispielsweise ein Treibsatz gezündet wird, wonach dessen Explosionsgase den Gassack füllen. Eine andere Möglichkeit besteht darin, ein unter Druck gespeichertes Gas sich in den Gassack entspannen zu lassen, nachdem ein Aktivator ein entsprechendes Aufforderungssignal erhalten hat.

Andere bekannte Rückhaltekomponenten eines Rückhaltesystems sind sogenannte Gurtstraffer, also Geräte, die im Fall eines Unfalls die Sicherheitsgurte straffen, um die im verunglückten Wagen sitzenden Personen fester an den Fahrzeugsitzen zu halten. Allen bekannten Systemen ist gemeinsam, daß die Reaktionen der Rückhaltekomponenten nach dem klassischen Entweder/Oder-Prinzip ablaufen, d. h., daß die Komponenten nach Erkennen einer Unfallsituation durch den Crashsensor in nur einer vorgegebenen Art und Weise reagieren, der Airbag also sich nur aufbläst und der Gurtstraffer den Gurt strafft, und zwar völlig unabhängig davon, ob weitere Bedingungen erfüllt sind. Genau dies aber führt in der Praxis zu Problemen. Beispielsweise sei hier genannt, daß es aufgrund des Entweder/Oder-Prinzips zu tödlichen Zwischenfällen kommen kann, wenn beispielsweise ein sogenannter Re-Board-Kindersitz auf dem Beifahrersitz abgestellt ist und mittels des Sicherheitsgurtes daran festgelegt ist. Im Falle eines Unfalls stellt dann das Aufblasen des Beifahrerairbags unter Umständen für das im Sitz sitzende oder liegende Kind eine tödliche Gefahr dar. Es ist auch einsichtig, daß die Standardreaktion einer Rückhaltekomponente, wie beispielsweise des Airbags, für Personen mit unterschiedlicher Körpergröße oder unterschiedlichem Körperumfang nicht gleich optimal sein kann. Herkömmliche Systeme und Komponenten sind also nicht flexibel, worin ein gravierender Nachteil der bekannten Systeme gesehen wird.
Passive Rückhaltesysteme sind in der Patentliteratur beispielsweise beschrieben in der US-A-5,413,378 und der DE-A-41 12 579. Alle diese Geräte weisen ein zentrales Steuergerät auf, welches die Aufgabe der Kollisionserkennung, Signalaufbereitung und Weiterleitung wahrzunehmen hat. Wird dieses Gerät jedoch beim Aufprall selbst beschädigt, so kann es zu einem Totalausfall des Rückhaltesystemes mit allen Folgen für die Fahrzeuginsassen kommen. Nichts anderes gelte für die Sicherungseinrichtung gemäß der DE-A-38 11 217, ebensowenig wie für das Airbagsystem gemäß der WO 95/11819, gemäß der eine elektronische Steuereinheit in Abhängigkeit verschiedener von Sensoren detektierten Signalen den Betrieb eines mehrstufigen Gasgenerators steuern. Zwar ist es beispielsweise aus der DE-Z-"Sensorik", Springer-Verlag 1992, W. Heywang bekannt, eine Reihe von Sensoren, die Teil eines Netzwerkes bilden, dezentral anzuordnen. Allein dies reicht jedoch im Hinblick auf die speziellen Anforderungen in einem passiven Rückhaltesystem in einem KFZ nicht aus, die Sicherheit der Fahrzeuginsassen zu gewährleisten, solange nämlich ein zentrales Steuerungsgerät vorgesehen ist, wie in den vorerwähnten Druckschriften beschrieben.
Vor diesem Hintergrund ist es nun die Aufgabe der vorliegenden Erfindung, hier Abhilfe zu schaffen, d. h. also, ein passives Rückhaltesystem für Kraftfahrzeuge zu schaffen. welches situationsbedingt flexibel im Falle eines Unfalls reagieren kann. Darüber hinaus soll eine in einem solchen System anwendbare Komponente vorgeschlagen werden.

Die Erfindung geht aus von einem Rückhaltesystem, welches wenigstens einen Crashsensor aufweist, der ein einen Unfall und dessen Schwere anzeigendes Signal erzeugt und optional eine bauliche Einheit mit der beschriebenen Zentralelektronik bildet. In dieser wird das Signal vom Crashsensor ausgewertet. Das System weist eine Anzahl von Rückhaltekomponenten wie Airbags oder Gurtstraffer auf, sowie diesen zugeordnet Positions- und Kindersitzerkennungs- und Sitzbelegungssensoren zum Erkennen des jeweiligen Ist-Nutzungszustandes wenigstens eines, vorzugsweise aller Fahrzeugsitze. Pro Fahrzeugsitz ist darüber hinaus ein sogenannter Gurtanlagesensor zur Feststellung, ob der Gurt angelegt ist oder nicht, vorgesehen.

Die der Erfindung zugrundeliegende Aufgabe wird gelöst durch ein Rückhaltesystem gemäß dem Anspruch 1. Bei diesem System wird im Kern von einem ähnlichen System wie im Stand der Technik ausgegangen. Allerdings weist vorliegend die Zentralelektronik keinen Prozessor auf, der sämtliche Berechnungen für alle Rückhaltekomponenten ausführt. Darüber hinaus sind sogenannte Sitzbelegungssensoren vorgesehen, mittels denen über eine beispielsweise Gewichtsmessung im wesentlichen das Gewicht der auf dem jeweiligen Fahrzeugsitz sitzenden Person ermittelt und als weiteren Parameter in die Berechnung des optimalen Reaktionsaufforderungssignals einfließen läßt.

Gemäß diesem Vorschlag wird die Aufgabe dadurch gelöst, daß die einzelnen Rückhaltekomponenten im Falle eines Unfalls von der Zentralelektronik ein Signal des Inhalts erhalten, zu reagieren, wobei die einzelnen Rückhaltekomponenten ihre Reaktionssignale selbst in einem ihnen jeweils zugeordneten Prozessor in Abhängigkeit von den Signalen der ihnen jeweils zugeordneten Positions-, Kindersitzerkennungs- und Sitzbelegungssensoren, Gurtanlagesensoren und des Crashsensors errechnen.

Die Zentralelektronik gibt also im Falle des Unfalls an die einzelnen Rückhaltekomponenten also lediglich das Signal, ihre bestimmungsgemäße Funktion auszuüben. Es wird in diesem Falle also nicht an jede Rückhaltekomponente ein relativ kompliziertes Datentelegramm versendet, sondern lediglich die Aufforderung, zu reagieren. Wie die Reaktion jeder einzelnen Rückhaltekomponente dann auszusehen hat, hat jede von den Komponenten vorher anhand des mittels der Sensorik ermittelten Ist-Nutzungszustandes jedes Fahrzeugssitzes selbst ermittelt. Die möglichen Reaktionen entsprechen den Reaktionen der ersten Ausführungsform.

Durch diesen Vorschlag wird die Zentralelektronik im Falle eines Unfalls von relativ komplizierten Berechnungen der individuellen Reaktionsaufforderungssignale in Form von aufwendigen Datentelegrammen befreit. Bedenkt man, was im Falle eines Unfalls die Elektronik eines Kraftfahrzeuges zu leisten hat, können sich hieraus unter Umständen lebensentscheidende Zeitvorteile ergeben, dadurch nämlich, daß die Zentralelektronik für das Rückhaltesystem lediglich ein Signal abgeben muß, um die Rückhaltekomponenten in individueller Weise reagieren zu lassen. Darüber hinaus ist auch eine Zentralelektronik im Falle eines Unfalls nicht vor Beschädigungen geschützt. Die Wahrscheinlichkeit, daß die Zentralelektronik das relativ einfache Signal zum Reagieren noch generieren kann, ist dabei allerdings wesentlich höher als daß die Elektronik noch für sämtliche Rückhaltekomponenten die individuellen Reaktionsaufforderungssignale generieren oder aus einem Speicher abrufen kann. Insofern wird durch den zusätzlichen Hardware-Aufwand bei der Erfindung, nämlich die dezentrale Anordnung von Prozessoren für jede Rückhaltekomponente, eine höhere Sicherheit erzielt.

Gemäß einer vorteilhaften Weiterbildung der der Erfindung ist vorgesehen, daß die Zentralelektronik elektrisch mit den einzelnen Rückhaltekomponenten über eine Busleitung in Verbindung steht. Dies kann über geeignete Datenübergabeschnittstellen erfolgen.

Ein Vorteil der Ankopplung der einzelnen Rückhaltekomponenten über einen Bus an die Zentralelektronik ist darin zu sehen, daß die elektromagnetische Verträglichkeit (EMV) deutlich erhöht wird gegenüber einzeln verdrahteten Systemen. Das dezentral und modular aufgebaute Rückhaltesystem gemäß der vorliegenden Erfindung gestattet die Anwendung der Busarchitektur in geeigneter Weise, wodurch die Sicherheit des Systems nochmals erhöht wird. Bei einzeln verdrahteten Systemen nämlich kann es zu Störeinflüssen benachbarter elektrischer Leitungen, die nicht Teil des Rückhaltesystems sind, kommen, so daß unter Umständen Fehlreaktionen einzelner Komponenten auftreten können.

Der weitere Aspekt der der vorliegenden Erfindung zugrundeliegenden Aufgabe, nämlich ein Airbag-Modul zu schaffen, welches sich für den Einsatz in dem erfindungsgemäßen Rückhaltesystem eignet, wird gelöst durch das Airbag-Modul gemäß dem Anspruch 3. Hierbei wird davon ausgegangen, daß das Modul über einen an sich bekannten mehrstufigen Gasgenerator und einen ein- oder mehrkammerigen Gassack verfügt. Der mehrstufige Gasgenerator ist in der Lage, bei geeigneter Ansteuerung unterschiedliche Gasmengen gegebenenfalls mit unterschiedlichem Gasdruck in einen Gassack zu leiten. Ein mehrkammeriger Gassack als solcher ist ebenfalls bekannt. Das Aufblasen einer unterschiedlichen Anzahl von Kammern des Gassackes dient dabei der Anpassung des Aufblasvolumens.

Das erfindungsgemäße Airbag-Modul verfügt über eine eigene elektronische Auswerteeinheit, in der Signale von Sensoren wie den bereits erwähnten Positions-, Kindersitzerkennungs- und Sitzbelegungssensoren sowie Gurtanlagesensoren hinsichtlich des Ist-Nutzungszustandes des jeweiligen Fahrzeugsitzes ausgewertet werden. Das von extern herangeführte Auslösesignal, also beispielsweise das von der Zentralelektronik abgegebene Signal des Inhalts, zu reagieren, steuert den Gasgenerator in Abhängigkeit vom ermittelten Ist-Nutzungszustandes des Fahrzeugsitzes, sowie gegebenenfalls vom Signal des Crashsensors so an, daß situationsbedingt eine oder mehrere Kammern des Gassackes mit Gas gefüllt werden. Hierbei sei nochmals in Erinnerung gerufen, daß das Signal vom Crashsensor auch die Schwere des Unfalls verschlüsselt beinhaltet. Auf diese Art und Weise ist das Airbag-Modul in der Lage, in Abhängigkeit der ermittelten jeweiligen Ist-Werte für die Nutzung des jeweiligen Fahrzeugsitzes und in Abhängigkeit von der Schwere des Unfalls in optimaler Weise zu reagieren. So wird das Modul beispielsweise so ausgelegt, daß der Gasgenerator sämtliche Kammern des Gassackes mit vollem Druck aufbläst, wenn vorher ermittelt worden ist, daß eine relativ große Person auf einem Fahrzeugsitz sitzt. Wird beispielsweise ein Re-Board-Kindersitz auf dem Beifahrersitz abgestellt und mit dem Sicherheitsgurt gesichert, so wird aufgrund des Gurtauszuges (sehr lang) und der Gewichtsermittlung (relativ leicht) aufgrund der Verknüpfung beider Signale festgelegt, daß der Gassack bei einem als relativ leicht detektierten Unfall überhaupt nicht aufgeblasen wird, um die eingangs geschilderte Gefahrensituation nicht aufkommen zu lassen.

Das erfindungsgemäße Airbag-Modul ist nicht darauf beschränkt, als Airbag auf der Fahrer- oder Beifahrerseite eingesetzt zu werden. Es kann an den Rücksitzen ebenso Einsatz finden wie als Seitenairbag.

Die Sensorik des Moduls kann noch vorteilhaft durch einen Temperatursensor am Gasgenerator ergänzt werden, der dessen Temperatur erfaßt und ein entsprechendes Signal aufbereitet, das der elektronischen Auswerteeinheit zugeführt wird. Hintergrund dieser Maßnahme ist, daß Gasgeneratoren extrem temperaturabhängig sind, d. h. letztendlich der Gasdruck, mit dem der Gassack aufgeblasen wird, hängt in extremer Weise von den Außentemperaturen ab. Bei niedrigen Temperaturen ist der Druck relativ gering, bei hohen Temperaturen extrem hoch. Das erfindungsgemäße Airbag-Modul gestattet hierfür, eine Kompensation durchzuführen, indem nämlich beispielsweise bei sehr niedrigen Temperaturen mehr Kammern aufgeblasen werden, als dies bei ansonsten unveränderten Parametern bei hohen Temperaturen der Fall wäre.

Schließlich ist gemäß einer vorteilhaften Weiterbildung noch vorgesehen, daß das Modul eine zusätzliche Anzeige aufweist, die bei positivem Signal vom Kindersitzerkennungssensor die Inaktivierung des Moduls signalisiert. Bei positivem Signal, d. h., daß der Sensor einen Kindersitz erkannt hat, kann dem Fahrzeuglenker dadurch vermittelt werden, daß eine Gefahr für das Kind durch ein zufälliges oder unbeabsichtigtes Aufblasen des Airbags aufgrund einer Fehlfunktion des Moduls nicht auftreten kann. Ab welcher Unfallschwere der Airbag aufgeblasen wird, wenn ein Kindersitz auf dem Beifahrersitz erkannt worden ist, unterliegt den unterschiedlichen Sicherheitsphilosophien.

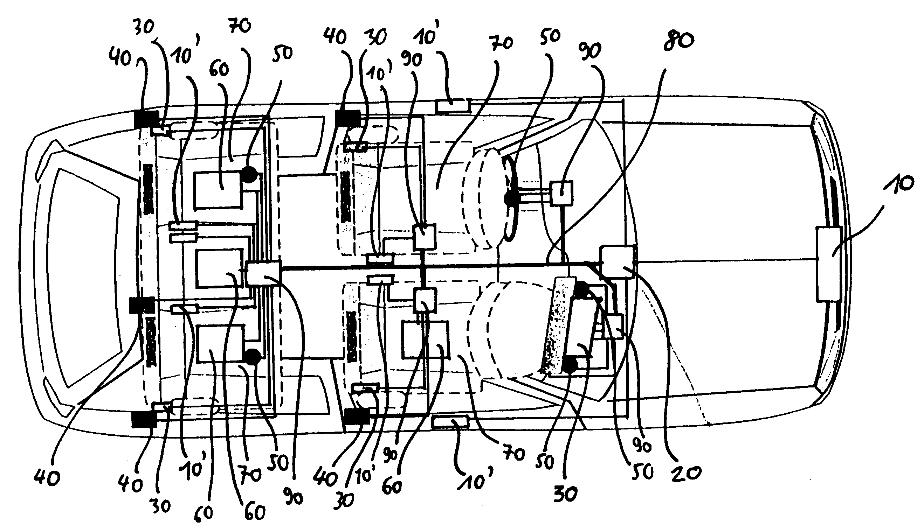

Die Erfindung wird anhand einer Ausführungsform gemäß der einzigen Zeichnungsfigur beispielhaft näher erläutert. Diese zeigt eine schematische Aufsicht auf ein Kraftfahrzeug mit einem gegenüber dem Stand der Technik komplexeren Rückhaltesystem. Vorliegend ist hier ein frontal angebrachter Crashsensor 10 neben den weiteren Crashsensoren 10' vorgesehen. Diese leiten ihre Signale an die Zentralelektronik 20 weiter, die vorliegend über keinen internen Prozessor verfügt. Vielmehr ist jeder Rückhaltekomponente wie Airbag 30 und Gurtstraffer 40 ein eigener Prozessor zugeordnet. Die dezentral angeordneten Prozessoren (nicht dargestellt) verarbeiten die Signale, welche sie von den Positions- und Kindersitzerkennungssensoren 50 sowie darüber hinaus von Sitzbelegungssensoren 60 erhalten, welche jedem Fahrzeugsitz 70 zugeordnet sind.

Die Sitzbelegungssensoren 60 arbeiten beispielsweise nach dem Prinzip, daß das Gewicht der auf dem jeweiligen Fahrzeugsitz sitzenden Person ermittelt wird, um dann in den dezentral angeordneten Prozessoren als Parameter in die Berechnung der optimalen Reaktion der Airbags 50 und der Gurtstraffer 40 einzugehen.

Vorliegend sind alle Rückhaltekomponenten (Airbags 50, Gurtstraffer 40) über schematisch angedeutete Datenschnittstellen 90 über einen Bus 80 mit der Zentralelektronik 20 verbunden. Dies hat, wie schon eingangs erwähnt, den Vorteil des gegenüber der Einzelverkabelung geringeren Aufwands des Systems und vor allem aber der Erhöhung der elektromagnetischen Verträglichkeit (EMV) gegenüber Störeinflüssen von außen von anderen elektrischen Systemen oder im Verhältnis zur Einzelverkabelung den weitgehenden Ausschluß von Störeinflüssen von Datentelegrammen in benachbarten Kabeln.

In den dezentral angeordneten Rückhaltekomponenten werden also abhängig vom Ist-Nutzungsgrades jedes Fahrzeugsitzes die optimalen Reaktionssignale errechnet und gegebenenfalls abgespeichert. Im Falle eines Unfalls signalisieren die Crashsensoren 10 und 10' diesen Umstand, woraufhin die Zentralelektronik 20 die Rückhaltekomponenten über den Datenbus 80 mit einem generellen, also nicht individuell auf die jeweilige Rückhaltekomponente abgestellten Signal ansteuert. Dieses Ansteuerungssignal entspricht der Aufforderung, sofort zu reagieren. Nach Empfang dieses Signals löst dann jede Rückhaltekomponente 40 und 50 die vorzugsweise im voraus berechnete, optimale Reaktion aus. Denkbar wäre zwar auch eine Online-Berechnung, was allerdings die Reaktionszeit verlängern würde.

## Patentansprüche

1. Passives Rückhaltesystem für Kraftfahrzeuge, aufweisend wenigstens einen Crashsensor (10, 10'), der ein einen Unfall und dessen Schwere anzeigendes Signal erzeugt und optional eine bauliche Einheit mit einer Zentralelektronik (20) bildet, in welcher das Signal vom Crashsensor ausgewertet wird, sowie eine Anzahl von Rückhaltekomponenten wie Airbags (30) und Gurtstraffer (40) und diesen zugeordnet Positions-, Kindersitzerkennungs (50) - und Sitzbelegungssensoren (60) zum Erkennen des jeweiligen Ist-Nutzungszustandes wenigstens eines, vorzugsweise aller Fahrzeugsitze (70), und pro Fahrzeugsitz (70) einen Gurtanlagesensor zur Feststellung, ob der Gurt angelegt ist,
dadurch gekennzeichnet,
daß die einzelnen Rückhaltekomponenten im Falle eines Unfalls von der Zentralelektronik (20) ein Signal des Inhalts erhalten, zu reagieren, wobei die einzelnen Rückhaltekomponenten (30, 40) ihre Reaktionssignale selbst in einem ihnen jeweils zugeordneten Prozessor in Abhängigkeit von den Signalen der ihnen jeweils zugeordneten Positions-, Kindersitzerkennungs- und Sitzbelegungssensoren, Gurtanlagesensoren und des Crashsensors errechnen.

2. Passives Rückhaltesystem nach Anspruch 1, dadurch gekennzeichnet, daß die Zentralelektronik (20) elektrisch mit den einzelnen Rückhaltekomponenten (30, 40) über eine Busleitung (80) in Verbindung steht.

3. Airbag-Modul als Rückhaltekomponente in einem Kraftfahrzeug als Teil eines passiven Rückhaltesystems, zur Verwendung als eine Rückhaltekomponente (30) in dem passiven Rückhaltesystem mit dezentralem Aufbau gemäß den Ansprüchen 1 oder 2, mit einem mehrstufigen Gasgenerator und einem ein- oder mehrkammerigen Gasack,
dadurch gekennzeichnet,
daß es über eine eigene elektronische Auswerteeinheit verfügt, in der Signale von Sensoren wie Positions-, Kindersitzerkennungs- und Sitzbelegungssensoren (50, 60) und Gurtanlagesensoren hinsichtlich des Ist-Nutzungszustandes des jeweiligen Fahrzeugsitzes ausgewertet werden, und daß es auf ein von extern herangeführtes Auslösesignal den Gasgenerator in Abhängigkeit vom ermittelten Ist-Nutzungszustandes des Fahrzeugsitzes so ansteuert, daß situationsbedingt ein oder mehrere Kammern des Gassackes mit Gas gefüllt werden.

4. Airbag-Modul nach Anspruch 3, dadurch gekennzeichnet, daß ein zusätzlicher Sensor am Gasgenerator vorgesehen ist, der dessen Temperatur erfaßt und ein entsprechendes Signal aufbereitet, das der elektronischen Auswerteeinheit zugeführt wird.

5. Airbag-Modul nach Anspruch 3 oder 4, dadurch gekennzeichnet, daß es eine zusätzliche Anzeige aufweist, die bei positivem Signal vom Kindersitzerkennungssensor die Inaktivierung des Moduls signalisiert.

## Claims

1. Passive restraint system for motor vehicles, having at least one crash sensor (10, 10') which generates a signal which indicates an accident and its severity, and optionally forms a physical unit with a central electronic system (20) in which the signal from the crash sensor is evaluated, and a number of restraint components such as airbags (30) and seat belt pretensioning devices (40) and position detection and child's seat detector sensors (50) and seat occupation sensors (60) assigned to the latter for detecting the respective actual state of use of at least one vehicle seat (70), preferably of all the vehicle seats (70), and one seat belt usage sensor, per vehicle seat (70) for determining whether the belt is being worn, characterized in that, in the case of an accident, the individual restraint components receive from the central electronic system (20) a signal whose content is to react, the individual restraint components (30, 40) calculating their reaction signals themselves in a processor, respectively assigned to them, as a function of the signals of the position, child's seat detection and seat occupation sensors and seat belt usage sensors, respectively assigned to them, and of the crash sensor.

2. Passive restraint system as claimed in Claim 1, characterized in that the central electronic system (20) is electrically connected to the individual restraint components (30, 40) via a busline (80).

3. Airbag module as restraint component in a motor vehicle as part of a passive restraint system, for use as a restraint component (30) in the passive restraint system with decentralized structure according to Claims 1 or 2, having a multistage gas generator and having a single-chamber or multichamber airbag, characterized in that it has its own electronic evaluation unit in which signals from sensors such as position, child's seat detection and seat occupation sensors (50, 60) and seat belt usage sensors are evaluated in terms of the actual state of use of the respective vehicle seat, and in that in response to an externally provided trigger signal it actuates the gas generator as a function of the actual state of use of the vehicle seat which is determined, in that one or more chambers of the airbag are filled with gas as a function of the situation.

4. Airbag module as claimed in Claim 3, characterized in that an additional sensor is provided on the gas generator, which sensor senses its temperature and prepares a corresponding signal which is fed to the electronic evaluation unit.

5. Airbag module as claimed in Claim 3 or 4, characterized in that it has an additional signal which signals the deactivation of the module when the child's seat detection sensor is positive.

## Revendications

1. Système de retenue passif pour véhicules automobiles, comportant au moins un détecteur (10, 10') de crash, qui produit un signal indiquant un accident et sa gravité et qui forme éventuellement une unité de construction avec une électronique (20) centrale dans laquelle le signal provenant du détecteur de crash est exploité, ainsi qu'un certain nombre d'éléments de retenue, tels que des coussins (30) gonflables et des tendeurs (40) de ceinture et, associés à ceux-ci, des détecteurs (50) de position et de reconnaissance de siège de bébé et des détecteurs (60) d'occupation de siège pour reconnaître l'état d'utilisation réelle associée d'au moins l'un des sièges (70) du véhicule, de préférence de tous les sièges du véhicule, et, par siège (70) du véhicule un détecteur de mise de ceinture pour détecter si la ceinture est mise, caractérisé en ce que les éléments de retenue individuels reçoivent, dans le cas d'un incident de l'électronique (20) centrale, un signal du contenu pour réagir, les éléments (30, 40) de retenue individuels calculant eux-mêmes leurs signaux de réaction dans un processeur qui leur est associé à chacun en fonction des signaux des détecteurs de position, de reconnaissance de siège de bébé et d'occupation de siège, des détecteurs de mise de ceinture et du détecteur de crash qui sont associés à chacun.

2. Système passif de retenue suivant la revendication 1, caractérisé en ce que l'électronique (20) centrale est en liaison du point de vue électrique avec les éléments (30, 40) de retenue individuels par l'intermédiaire d'une ligne (80) de bus.

3. Module de coussin gonflable servant d'élément de retenue dans un véhicule automobile, en tant que partie d'un système passif de retenue, pour utilisation comme élément (30) de retenue dans le système passif de retenue à structure décentralisée suivant les revendications 1 ou 2, comportant un générateur de gaz à plusieurs étages et un sac de gaz à une chambre ou à plusieurs chambres, caractérisé en ce qu'il dispose d'une unité d'exploitation d'électronique propre dans laquelle des signaux de capteurs, tels que des capteurs (50, 60) de position, de reconnaissance de siège de bébé et d'occupation de siège et des capteurs de mise de ceinture, sont exploités du point de vue de l'état d'utilisation réelle du siège associé de véhicule et en ce qu'ils commandent sur un signal de déclenchement provenant de l'extérieur le générateur de gaz en fonction de l'état d'utilisation réelle déterminé du siège du véhicule de telle manière que, en fonction de la situation, une chambre ou plusieurs chambres du sac de gaz sont remplies de gaz.

4. Module de coussin gonflable suivant la revendication 3, caractérisé en ce qu'il est prévu un détecteur supplémentaire sur le générateur de gaz, qui détecte sa température et met à disposition un signal correspondant qui est envoyé à l'unité d'exploitation électronique.

5. Module de coussin gonflable suivant la revendication 3 ou 4, caractérisé en ce qu'il comporte un dispositif d'indication supplémentaire qui, en cas de signal positif provenant du détecteur de reconnaissance de siège de bébé, signale l'inactivité du module.
